# EUROPEAN PATENT APPLICATION

(11) **EP 1 752 341 A1**
(43) Date of publication of application: **14.02.2007**
(21) Application number: 05466009.7
(22) Date of filing: 11.08.2005
(51) Int. Cl.: B60R 21/20

(54) **Airbag cover in instrument panel**

(71) Applicant: Peguform Bohemia k.s., 460 78 Liberec (CZ)
(72) Inventor: Stefek, Pavel, 460 01 Liberec 14 (CZ); Soukup, Bretislav, 460 01 Liberec 2 (CZ); Landa, Frantisek, 463 31 Chrastava (CZ)
(74) Representative: Belfin, Vladimir

(57) **Abstract**

The invention relates to a separate air-bag cover in a instrument panel, which is reinforced by a strong and tough reinforcement (3) sheet, firmly joined to the cover (1), wherein its sections (3b) constituting the cover (1) hinge, are extended and clinched with the hooked ends (4a, 4b) onto a solid section (2a) of the stiffening panel (2), so that after separating the cover (1) from the stiffening panel (2) the complete cover (1) with the reinforcement (3) can lift up above the instrument panel outer surface, till the hooked ends (4a, 4b) clinch onto the solid section (2a) of the stiffening panel (2), anchor there and prevent the cover (1) from its further moving up, whereon the air-bag pressure together with cover (1) inertial movement makes the cover (1) to swing away from a trajectory of the air-bag, penetrating into passenger room.

## Description

### Field of the Invention

The invention relates to a passenger car interior and to a front seat retaining passenger protection system in motor vehicles.

### Background of the Invention

An air-bag is a vital part of complex protection for the motor vehicle occupants. The air-bag for the front seat passenger protection is usually located within the instrument panel, as close as possible to the point, where, in case of a vehicle frontal crash, the head of the passenger fastened by safety belt is aiming. From point of view of air-bag operation, it is essential for the air-bag cover to be opened reliably and easily by inflating pressure and so clear a path to the air-bag penetrating into a passenger space, without causing any damage to the air-bag. No parts or debris, which could cause passenger's injury or any air-bag damage, are allowed to be separated from the cover or from other instrument panel components. The absolute functional reliability at acceptable costs is required. Solely for the aesthetic reasons, it is usually required that the air-bag may not be visible before its activation and its cover should merge or form a harmonic assembly with the instrument panel by means of its shape, height and surface.

The existing configurations of the instrument panel with the air-bag cover can be divided according two principal concepts:
a) The air-bag cover is an entirely separate component and it is not a part of the stiffening panel. The cover is only physically held in a position at the air-bag opening mouth in the instrument panel in a suitable way and swung or slid away on air-bag activation. This concept usually represents more complex configuration with relatively larger number of components.
b) The integrated cover is an integral part of the stiffening panel, so it must be first separated along most of its perimeter from the instrument panel on air-bag activation as it is forced by the inflating air-bag pressure, to be subsequently swung open and let the air-bag go out. This concept of the cover, integrated into the instrument panel, provides the possibility of simpler configuration with fewer parts, but it is connected with considerable mechanical loads on the cover and its surroundings.

The separate air-bag covers, i.e. the covers built according to the first concept, can be opened by simple folding up, shifting aside, combined folding and shifting etc. in dependence on design of a cover hinge and its anchoring.

The existing cover hinges are of various design. The reinforcement sheet, anchored in the cover itself and in a solid section of the stiffening panel, or the various articulated mechanisms with arms situated between the stiffening panel and the cover are most frequent for that purpose. When the hinge between the cover and the stiffening panel (e.g. DE 19735438) is intentionally strongly corrugated, thiscorrugation allows the cover to be shifted above the instrument panel at first and then to be folded up there.

There are also solutions with the cover tied (simply or multiply) by loose cable or cord, so that after the air-bag activation the cover can be pushed relatively high above the instrument panel (US 5496060, US 5979929), it is detained by the tie before it can hit a passenger.

The reinforcement, serving simultaneously as a stiffening panel of the cover and of the adjacent stiffening panel region, can be made from perforated sheet metal (see for example DE 4437773, US 5564733, JP 2000318557, US 6565115), metal grid (such as in US 5382047), textile (DE 19962551, GB 2359283), knitted fabric or mesh tissue (DE 19935625), fibres or yarn etc., that means any ductile, tough and strong structure capable to join the cover and the stiffening panel and to serve as a cover hinge simultaneously.

Joining of the reinforcement to the cover and to the stiffening panel can be achieved either by pressing the reinforcement into the back side of the cover and stiffening panel - then the reinforcement becomes an integral part of the stiffening panel and the cover, or purely mechanically.

The cover can be either of one-piece design and swing as a whole to one side (typically toward a windscreen) or of two-piece design with each cover-half swinging to its side.

### Summary of the Invention

The invention relates to a configuration of the instrument panel with an integrated air-bag cover, by a concept of the one-piece or of the two-piece cover, integrated into the stiffening panel which is involved into the instrument panel, and which merges a harmonic assembly with the instrument panel, in terms of its shape, height and surface.

The invention fundamental consists of the fact, that an substantial portion of the air-bag cover, integrated into an instrument panel, which is based on a plastic stiffening panel, is reinforced by a strong and tough reinforcement sheet e.g. metal sheet, being firmly joined to the cover, wherein the sections, constituting the cover hinge, are extended and equipped with hook-shaped ends, with a clearance between the hook tops and the solid section of the stiffening panel, so that after separation of the cover from the stiffening panel, a lifting the complete cover with the reinforcement up to a level above the instrument panel outer surface is allowed, till the hooked ends clinch onto the stiffening panel solid section, anchor there and prevent the cover from its further moving up, whereon the air-bag pressure, together with cover inertial movement, makes the cover to swing away from a trajectory of the air-bag, penetrating into passenger room.

In contrast to the existing configurations, before the air-bag activation the reinforcement is firmly joined only to the air-bag cover and not also to the instrument panel stiffening panel. Till after the air-bag activation and successive cover separation from the stiffening panel the extended connecting hinge sections clinch onto the solid section of the stiffening panel.

The two-piece cover configuration is a complete analogy to the one-piece cover, since each cover part has its own reinforcement and its own hinge and is folding up to its own side about its own hinge.

The solution substantially lowers danger of damaging the inflating air-bag by internal cover surface.

### Brief Description of the Drawings

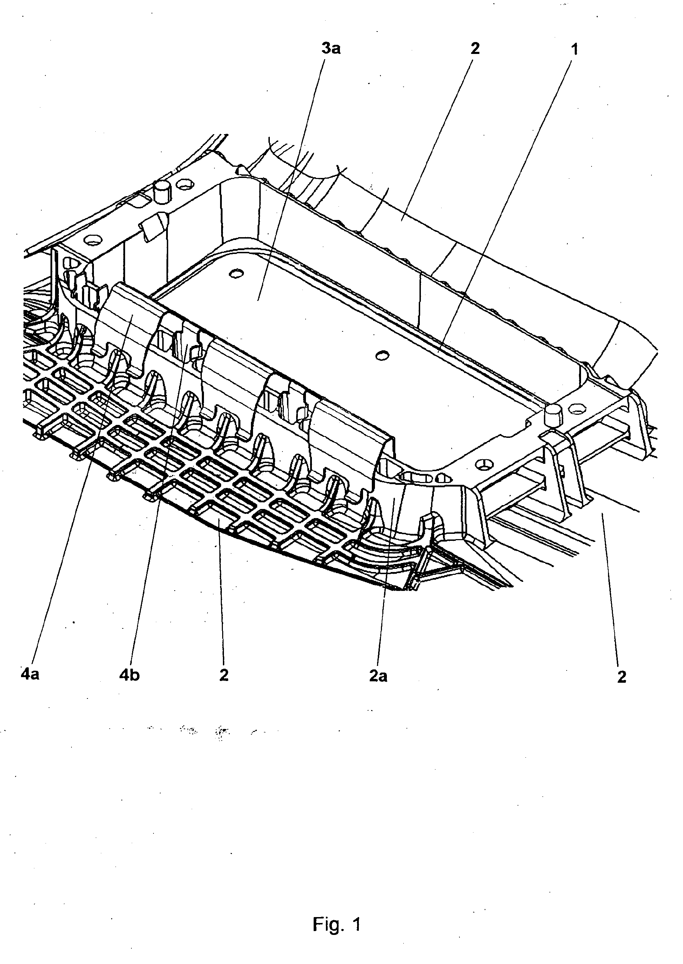

- Fig.1: shows a solid section of the stiffening panel with integrated one-piece air-bag cover with the reinforcement,

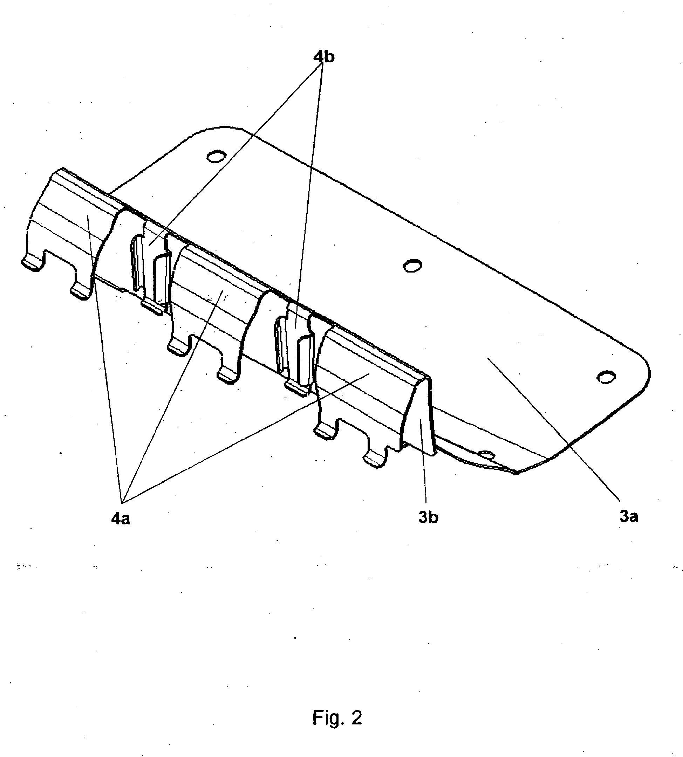

- Fig.2: shows the reinforcement alone with section reinforcing the cover and with the extended connecting section constituting the cover hinge,

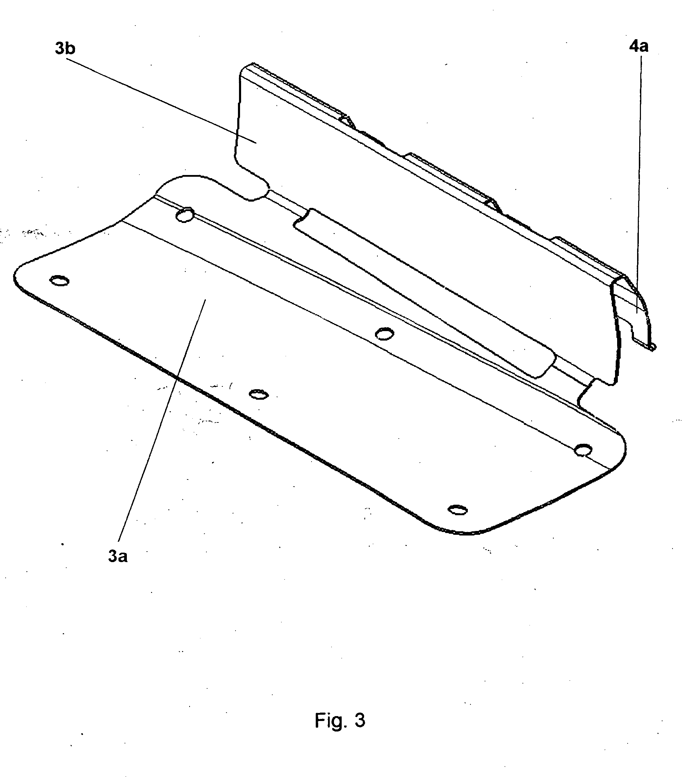

- Fig.3: shows the reinforcement alone with section reinforcing the cover and with the extended connecting section constituting the cover hinge, equipped with hooked ends,

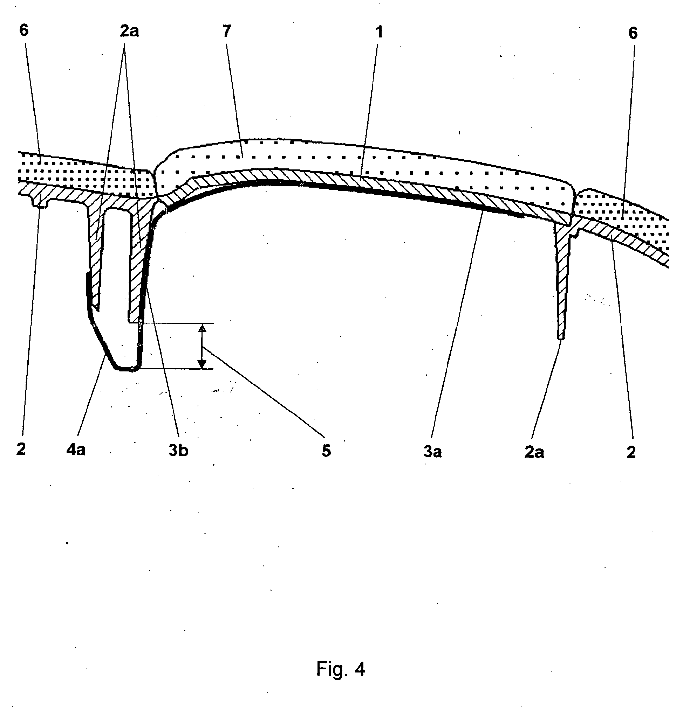

- Fig.4: shows the cross-section through the integral air-bag cover, with part of the reinforcement reinforcing the cover, connecting hinge section and adjacent region of the stiffening panel, crossing through the end parallel to the longitudinal vehicle axis, showing situation before the air-bag activation,

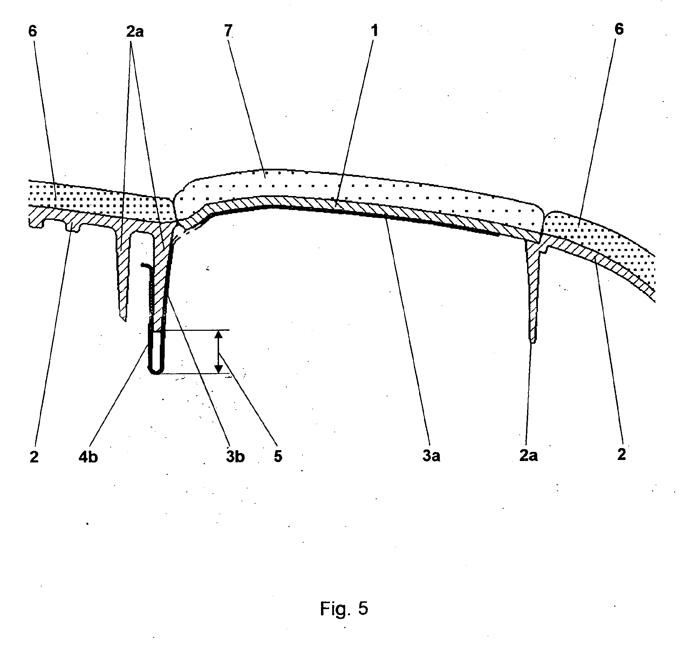

- Fig.5: shows the cross-section through the integral air-bag cover, with part of the reinforcement reinforcing the cover, connecting hinge section and adjacent region of the stiffening panel, crossing through the end parallel to the longitudinal vehicle axis, showing situation before the air-bag activation

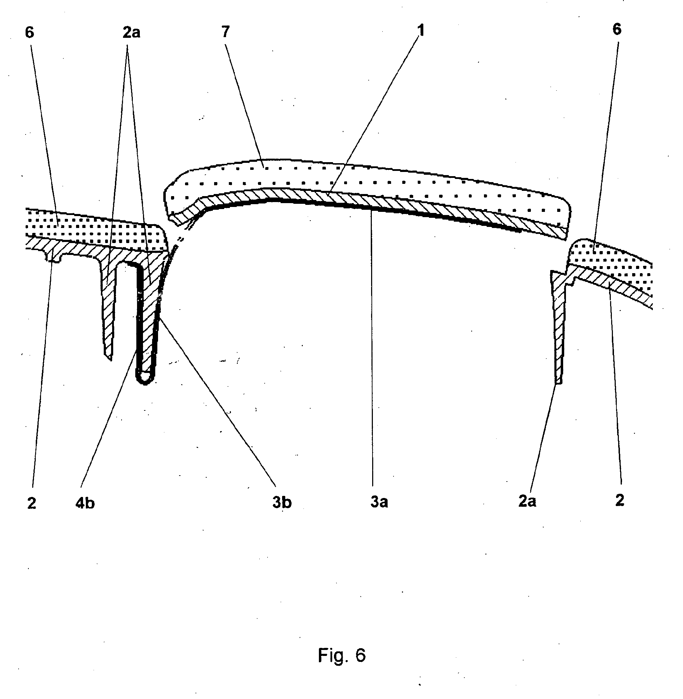

- Fig. 6: shows the cross-section through the separated air-bag cover, with a section of the reinforcement reinforcing the cover, connecting hinge section and adjacent region of the stiffening panel, crossing through the end parallel to the longitudinal vehicle axis, showing situation right after the air-bag activation, when the cover is already separated and lifted up above the stiffening panel, but not swung away yet.

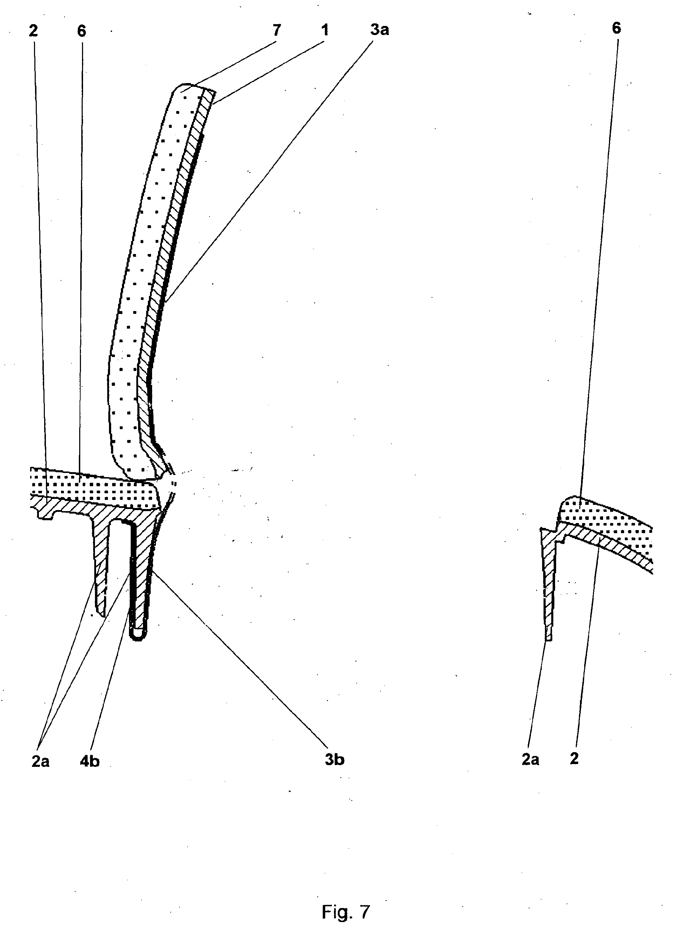

- Fig. 7: shows the cross-section through the separated air-bag cover, with a section of the reinforcement reinforcing the cover, connecting hinge section and adjacent region of the stiffening panel, crossing through the end parallel to the longitudinal vehicle axis, showing situation after the air-bag activation, when the cover is separated and lifted up above the stiffening panel and swung.

### Description of the Preferred Embodiment

The stiffening panel 2 with a one-piece integrated air-bag cover 1, containing a metal reinforcement 4, is made from polypropylene-based material. The instrument panel outer surface is coated with covering skin 6.

Substantial portion of the air-bag cover 1 is reinforced by a strong and tough reinforcement 3 of metal sheet underside, while the cover 1 edges are perforated.

The adjacent region of the cover 1, a solid section 2a of the stiffening panel 2, is strengthened by solid massive rim and ribs. The reinforcement 3 is a one-piece stamped metal sheet, having extended sections 3b, constituting the cover 1 hinge on the stiffening panel 2. The openings in section 3a of the reinforcement 3 serve for mechanical joining of the reinforcement 3 to the cover 1.

Before the air-bag activation, the cover 1 is an integral part of the stiffening panel 2, the reinforcement 3 is firmly joined to the cover 1, and its extended sections 3b, constituting the cover 1 hinge, freely rest in touch with a rim of solid section 2a of the stiffening panel 2, while between their hooked ends 4a, 4b and the rim is a clearance 5, allowing the cover 1, after its entire separation, to lift with the whole reinforcement 3 up.

There are two kinds of the hooked ends 4a, 4b of the hinge - the wider ends 4a and the narrower ends 4b, enabling a better load distribution to the solid part 2a of the stiffening panel 2.

After separation from the stiffening panel 2 along its entire perimeter, the cover 1 is lifted up so far above the stiffening panel 2 outer surface till the hooked ends 4a, 4b clinch onto solid section 2a of the stiffening panel 2, anchor there and prevent the cover 1 from its further moving up, and swing around the hinge to a windscreen, away from trajectory of the inflating air-bag.

### Field of the Application

The invention is pertinent for production of the plastics parts of interiors of the motor vehicles, equipped with a retaining passenger protection system including an air-bag.

### List of the reference sign

- 1: Air-bag cover
- 2: Stiffening panel
- 2a: Solid section of the stiffening panel, adjacent to the cover
- 3: Reinforcement
- 3a: Section of the reinforcement reinforcing the cover
- 3b: Section of the reinforcement constituting the cover hinge
- 4a: Hooked wider section of the reinforcement, constituting the cover hinge
- 4b: Hooked narrower section of the reinforcement, constituting the cover hinge
- 5: Clearance defining the cover lift
- 6: Skin covering the instrument panel

## Claims

1. Air-bag cover (1) in an instrument panel, based on the plastic stiffening panel (2), **characterized by** the fact, that a section (3a) of the reinforcement (3) sheet, made of a strong tough material, is firmly joined to the cover (1) underside, reinforcing its section, while the section (3b) of the reinforcement (3), constituting the hinge, is extended and its ends (4a, 4b) are hooked, clinched onto a solid section (2a) of the stiffening panel (2) with a clearance (5).

2. Air-bag cover (1) according to claim 1 **characterized by** the fact, that the ends (4a, 4b) of the part (3b) of the reinforcement (3) constituting a hinge, are at least of two shapes.

3. Air-bag cover (1) according to claim 1 **characterized by** the fact, that all ends of the part (3b) of the reinforcement (3) constituting a hinge, have the same shape as the ends (4a).

4. Air-bag cover (1) according to claim 1 **characterized by** the fact, that all ends of the part (3b) of the reinforcement (3) constituting a hinge, have the same shape as the ends (4b).
